**Europäisches Patentamt**

**European Patent Office**

**Office européen des brevets**

(19)

(11) Veröffentlichungsnummer : **0 074 601 B2**

(12) ## NEUE EUROPÄISCHE PATENTSCHRIFT

(45) Veröffentlichungstag der neuen Patentschrift :
**19.08.92 Patentblatt 92/34**

(51) Int. Cl.$^5$ : **B23B 27/16**

(21) Anmeldenummer : **82108216.1**

(22) Anmeldetag : **07.09.82**

(54) **Schneidwerkzeug.**

(30) Priorität : **15.09.81 DE 3136502**

(43) Veröffentlichungstag der Anmeldung :
**23.03.83 Patentblatt 83/12**

(45) Bekanntmachung des Hinweises auf die
Patenterteilung :
**23.07.86 Patentblatt 86/30**

(45) Bekanntmachung des Hinweises auf die
Entscheidung über den Einspruch :
**19.08.92 Patentblatt 92/34**

(84) Benannte Vertragsstaaten :
**AT BE CH DE FR GB IT LI LU NL SE**

(56) Entgegenhaltungen :
**CH-A- 515 086**

(56) Entgegenhaltungen :
**DE-A- 1 602 817**
**DE-A- 1 752 220**
**DE-A- 1 941 982**
**DE-A- 1 950 719**
**DE-A- 2 620 201**
**DE-U- 7 212 256**
**DE-U- 7 738 536**
**FR-A- 2 052 070**
**GB-A- 1 060 906**
**GB-A- 1 567 004**
**US-A- 3 341 923**

(73) Patentinhaber : **Feldmühle Aktiengesellschaft
Fritz-Vomfelde-Platz 4
W-4000 Düsseldorf 11 (DE)**

(72) Erfinder : **Kraft, Harald, Dipl.-Ing.
Aspachstrasse 9
W-7336 Uhingen (DE)**

**EP 0 074 601 B2**

## Beschreibung

Die Erfindung betrifft ein Schneidwerkzeug, insbesondere einen Drehmeißel, bestehend aus einem Klemmhalter, der eine Ausnehmung zur Aufnahme eines Schneideinsatzes aufweist, wobei der Schneideinsatz mit mindestens einer Spannmulde versehen ist, in die ein Ansatz einer Spannpratze eingreift, die mit Führungsnocken versehen ist, die an einer Schräge des Klemmhalters, der im Bereich der Schräge eine Verdrehsicherung, die sich zwischen die Führungsnocken der Spannpratze erstreckt, trägt, angreifen und die Spannpratze über eine Spannschraube mit dem Klemmhalter verbunden ist, wobei die Breite des Ansatzes der Spannpratze gleich oder kleiner dem Abstand zwischen den Enden vor zwei sich gegenüberliegenden konvexer Flächenbereichen der Spannmulde des Schneideinsatzes ist.

Ein derartiges Schneidwerkzeug ist aus der CH-A-515 086 und der analogen FR-A-20 52 070 bekannt. Diese Schweizer Patentschrift zeigt und beschreibt einen Kopierdrehmeißel, bei dem die Spannpratze in ihrem rückwärtigen Teil gegen Verdrehung durch einen Stift gesichert ist, wobei dieser rückwärtige Teil gleichzeitig eine Schräge aufweist, die mit einer entsprechenden Schräge des Stahlhalters zusammenwirkt, ohne daß beim Anziehen der Spannpratze diese nach hinten bewegt wird. Der vordere Bereich der Spannpratze weist eine Nase auf, die die Form einer Kugelkappe besitzt. Diese Kugelkappe greift in eine kegelförmige Vertiefung der Schneidplatte ein, wobei durch Spannen der Spannschraube die Schneidplatte in den Sitz eingezogen und gehaltert wird.

Diese Konstruktion weist zwei entscheidende Nachteile auf, die ihren Einsatz für Keramikschneidplatten verbieten.

1.

Die trichterförmige Ausnehmung der Schneidplatte führt in Verbindung mit dem Kugelkopf der in sie eingreifenden Spannpratze zur Bildung eines Liniendruckes - Kugel und kegelförmige Ausnehmung ergeben eine kreisförmige Berührungslinie - wodurch immense Sprengkräfte ausgeübt werden, die zur Zerstörung der Schneidplatte führen. Keramische Materialien sind bekanntlich gegen Druck äußerst unempfindlich, aber sehr empfindlich gegen Zugspannung und Biegespannung. Der Eingriff der Kugel in den Trichter führt zur Bildung von Zugspannungen im schwächsten Bereich der Schneidplatte. Zusätzlich wird sie in diesem Bereich auch noch auf Biegung beansprucht.

2.

Durch die Ausnehmung im Stahlhalter, in die die Schneidplatte eingelegt wird, ist die Lage der Schneidplatte bestimmt. Durch die Schräge am Stahlhalter und die Schräge an der Spannpratze ist die Lage der Spannpratze bestimmt. Der Eingriff der Kugel in die kegelförmige Ausnehmung der Schneidplatte führt zu einer Linienberührung zwischen Kugel und Schneidplatte, auch wenn ausdrücklich in der CH-A-515 086 davon gesprochen wird, daß sich die Achsen von Kugelkopf und konischer Vertiefung in der Schneidplatte nicht decken. Beim Anziehen der Spannschraube wird diese Deckung zwangsläufig entweder durch Verformung der Spannpratze oder durch Verformung der Spannschraube erreicht, d. h. es liegt eine Überbestimmung der Lage der Schneidplatte vor, die beim Einsatz von keramischen Schneidplatten nicht tolerierbar ist. Die CH-A-515 086 nennt deshalb auch als Schneidplattenmaterial Hartmetall oder vergüteten Schnelldrehstahl, beides Materialien, die in sich recht zäh sind und damit diese Spannungen aufnehmen können, was bei der Keramikschneidplatte nicht der Fall ist.

Aufgabe der vorliegenden Erfindung ist daher, ein Schneidwerkzeug zu schaffen, das einen auswechselbaren Einsatz besitzt, bei dem der Schneideinsatz beim ziehenden Schnitt gehalten, beim Auswechseln des Schneideinsatzes auch bei Überkopfschnitten automatisch in seine festgelegte Position gebracht und das Einbringen von Zugspannungen in die Schneidplatte beim Spanen vermieden wird.

Gelöst wird diese Aufgabe durch ein Schneidwerkzeug, das durch die Kombination folgender Merkmale gekennzeichnet ist:

a) der Schneideinsatz besteht aus oxidkeramischem Material,

b) die Spannmulde des Schneideinsatzes ist so ausgeführt, daß die sie begrenzenden Wandungen über Kreisrundungen in den Bodenbereich der Spannmulde übergehen,

c) der Ansatz der Spannpratze ist halbtonnen- oder halbzylinderförmig,

d) der Ansatz der Spannpratze greift im wesentlichen im mittleren Bereich der Spannmulde punktförmig an, die an dieser Stelle eine Zylindermantelfläche mit einer zu deren Achse hin gerichteten Aufwölbung aufweist,

e) das Schneidwerkzeug ist so ausgebildet, daß unter Einspannung die Spannpratze sich relativ zur Längsachse des Klemmhalters bewesen kann, um den Ansatz der Spannpratze in punktförmiger Berührung mit der Spannmulde zu halten.

Dadurch, daß der Ansatz der Spannpratze in die Spannmulde eingreift, kann der Schneideinsatz mittels der Spannpratze bewegt werden. Die Spannpratze weist ihrerseits Führungsnocken auf, die an einer Schräge

2

des Klemmhalters angreifen, d. h., daß beim Anziehen der Spannpratze die Führungsnocken an der Schräge des Klemmhalters entlang gleiten und die Spannpratze und mit ihr den Schneideinsatz in die Ausnehmung des Klemmhalters einzeihen, wo sie an den Wandungen ausgerichtet wird. Durch die Schräge des Klemmhalters in Verbindung mit den Führungsnocken wird also bereits sowohl die vorgesehene Lage des Schneideinsatzes als auch die vorgesehene Lage der Spannpratze erreicht. Beim Lösen der Spannpratze entfernt diese sich durch die eingebaute Hebefeder vom Klemmhalter. Damit liegen die Führungsnocken nicht mehr an der Schräge des Klemmhalters an, obwohl der Ansatz der Spannpratze noch in die Spannmulde des Schneideinsatzes eingreift. In dieser Stellung wirkt die Verdrehsicherung, die sich zwischen den Führungsnocken der Spannpratze befindet und die im Klemmhalter befestigt ist, so daß die Spannpratze sich nicht verdrehen kann. Gleichzeitig ist es aber möglich, die Spannpratze zu kippen und dadurch den Ansatz der Spannpratze aus der Spannmulde des Schneideinsatzes zu bewesen. Der Schneideinsatz kann also, obgleich er durch die Spannpratze auch in Überkopfstellung nach Lösen der Spannschraube noch sehalten wird, von Hand aus dem Klemmhalter entnommen werden und gegen einen anderen ausgetauscht werden. Da sich beim Anziehen der Spannschraube der Schneideinsatz selbst justiert, ist diese Konstruktion hervorrasend für schwer zugängliche Stellen geeignet, wo bisher der Ausbau des Klemmhalters erforderlich war.

Gemäß der Erfindung ist der Ansatz der Spannpratze halbtonnen- oder halbzylinderförmig ausgeführt, um eine punktförmige Berührung des Ansatzes in der Spannmulde zu gewährleisten.

Die Breite des Ansatzes der Spannpratze ist gleich oder kleiner dem Abstand zwischen den Enden von zwei sich gegenüberliegenden konvexen Kurven. Diese Ausgestaltung ermöglicht größere Toleranzen bei der Herstellung des Klemmhalters und der Spannpratze. Beim Klemmhalter muß aufgrund dieser Ausführung die Bohrung, die die Spannpratze bzw. die Spannschraube der Spannpratze aufnimmt, nicht mit absoluter Genauigkeit der Ausnehmung im Klemmhalter zugeordnet werden und auch umgekehrt. Da sich durch die Punktauflage des Klemmhalteransatzes in Verbindung mit der großzügigeren Bemessung der Spannmulde die Möglichkeit ergibt, daß der Ansatz, auch wenn er unter verschiedenem Winkel aufgrund der Fertigungstoleranzen in die Spannmulde eingreift, noch genügend Spiel hat, um sich an einem Druckpunkt zu justieren.

Die Wandungen der Spannmulde gehen über Kreisrundungen in ihren Bodenbereich über. Durch diese spezielle Ausgestaltung der Spannmulde im .Schneideinsatz ist es möglich, insbesondere oxidkeramische Werkstoffe, wie beispielsweise Aluminiumoxid oder Zirkonoxid, als Werkstoff für den Schneideinsatz einzusetzen und trotzdem eine Ausnehmung in den Schneideinsatz einzubringen, die nicht zu einer Schwächung und damit zum Bruch des Schneideinsatzes führt.

Oxidkeramische Materialien werden seit langer Zeit zu Schneideinsätzen verpreßt und im Anschluß daran gesintert. Es war bisher jedoch nicht möglich, sie mit Ausnehmungen zu versehen, die ein zentrierendes Spannen ermöglichen, wenn diese Einsätze hohen Belastungen ausgesetzt werden sollen. Dadurch, daß die Spannmulde ballig ausgeführt ist, also keinerlei scharfe Kanten vorhanden sind, fließt während des Preßvorganges das Pulver, aus dem die Oxidkeramik besteht, leichter. Es ist damit gleichmäßiger verpreßbar, d. h. bei der Herstellung tritt ein gleichmäßiger Preßdruck auf, der zu einer Vergleichmäßigung der Festigkeit über den gesamten Querschnitt des Schneideinsatzes führt. Daraus resultiert, daß der Schneideinsatz bruchunanfälliger wird.

Der Ansatz der Spannpratze steht mit einer durch die Linien der Ausnehmung begrenzten Fläche in punktförmiger Berührung. Diese Linien sind konkave Linien, da die Spannmulde an dieser Stelle eine Zylindermantelfläche mit einer zu deren Achse hin gerichteten Aufwölbung aufweist.

Die Spannpratze greift dadurch weder flächig, wie z. B. qemäß der DE-OS 26 20 201, noch linienförmig, wie in der US-PS-3 341 923 dargestellt, am Schneideinsatz an. Stattdessen wird ein punktförmiger Druck ausgeübt Oxidkeramische Materialien halten bekanntlich immense Druckspannungen aus, so daß auch durch einen punktförmigen Bereich große Kräfte übertragen werden können, ohne daß sich das negativ auf den Schneideinsatz auswirkt. Demgegenüber sind sie für Biegespannungen und auch für Zugspannungen wesentlich anfälliger, was konstruktiv berücksichtigt werden muß.

Der punktförmige Druck ergibt sich einerseits aus der Gestaltung der Spannpratze, andererseits aus der Gestaltung der Spannmulde. Nach dem Einlegen des Schneideinsatzes in die Ausnehmung des Klemmhalters greift beim Anziehen des Klemmhalters der Ansatz in die Spannmulde ein, wobei er mit einer Seitenfläche in punktförmiger Berührung steht. Durch weiteres Anziehen der Spannpratze wird ein Druck ausgeübt. Der Berührungspunkt verlagert sich in der Spannmulde des Schneideinsatzes weiter nach unten. Gleichzeitig gleiten die Führungsnocken auf der Schräge des Klemmhalters nach unten. Dabei tritt eine seitlich wirkende Kraft auf, die den Schneideinsatz in Richtung der Begrenzung der Ausnehmung verschiebt, .so daß die Schneidplatte ausgerichtet wird. Durch weiteres Anziehen der Schraube der Spannpratze wird der Schneideinsatz fest in seiner ausgerichteten Stellung verankert.

Gemäß einer vorteilhaften Ausgestaltung der Erfindung sind die Radien der Kurven, die den Quersrhnitt der Spannmulde begrenzen, größer als deren Tiefe.

Es ergibt sich damit eine relativ flache, allseitig gerundete Ausnehmung, die, wie schon oben ausgeführt, bei der Herstellung der Schneideinsätze sich sehr vorteilhaft auswirkt, die Festigkeit des Einsatzes nicht reduziert und trotzdem ein zentrierendes Spannen ermöglicht.

Eine bevorzugte Ausgestaltung der Erfindung sieht vor, daß der maximale Halbmesser des halbtonnenförmigen Ansatzes der Spannpratze 60 bis 80 % der Größe des Radius im engsten Bereich der Spannmulde im Schneideinsatz beträgt. Auch durch diese Ausgestaltung der Erfindung wird erreicht, daß die Bearbeitungsgenauigkeit bei der Herstellung des Klemmhalters bzw. der Spannpratze reduziert werden kann. So ist es dadurch möglich, die Spannpratze beispielsweise im Gietßverfahren herzustellen.

Ausführungsbeispiele der Erfindung werden nachstehend anhand der Zeichnungen beschrieben.

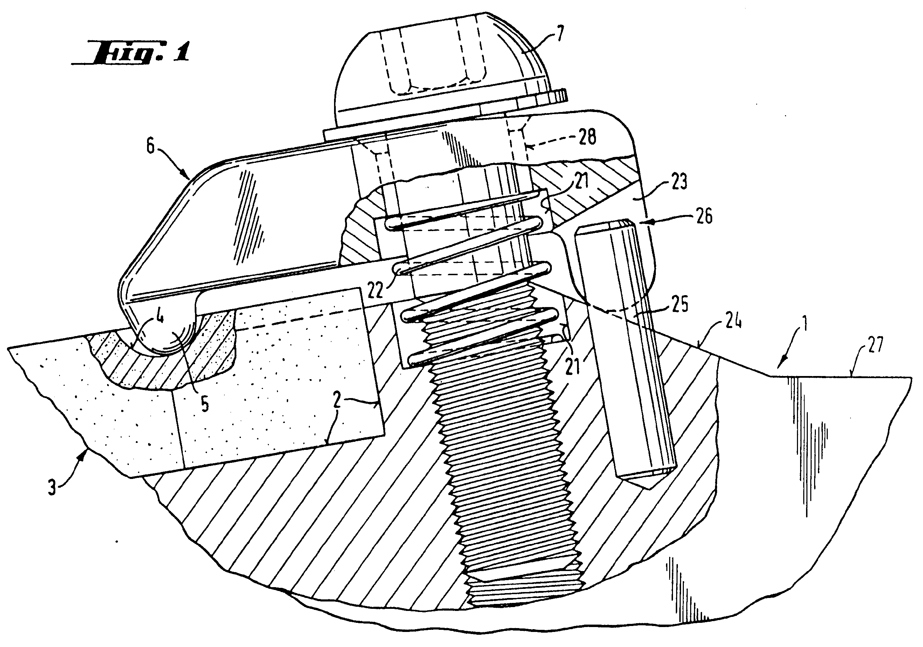

Fig. 1 zeigt einen Ausschnitt aus einem Klemmstahlhalter mit aufgesetzter Spannpratze und eingelegtem Schneideinsatz,

Fig. 2 zeigt die Draufsicht auf einen prismatischen Schneideinsatz, dessen Spannmulde durch konvexe Bögen und konkave Linien gebildet ist,

Fig. 3 zeigt einen Teilschnitt entlang der Linie III-III von Fig. 2,

Fig. 4 zeist einen Teilschnitt entlang der Linie IV-IV von Fig. 2,

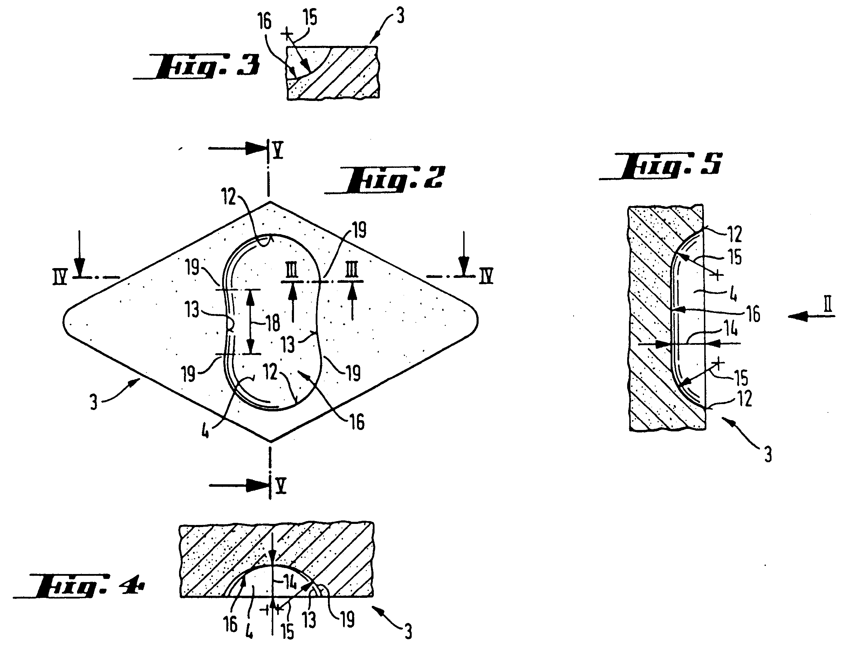

Fig. 5 einen Teilschnitt entlang der Linie V-V von Fig. 2,

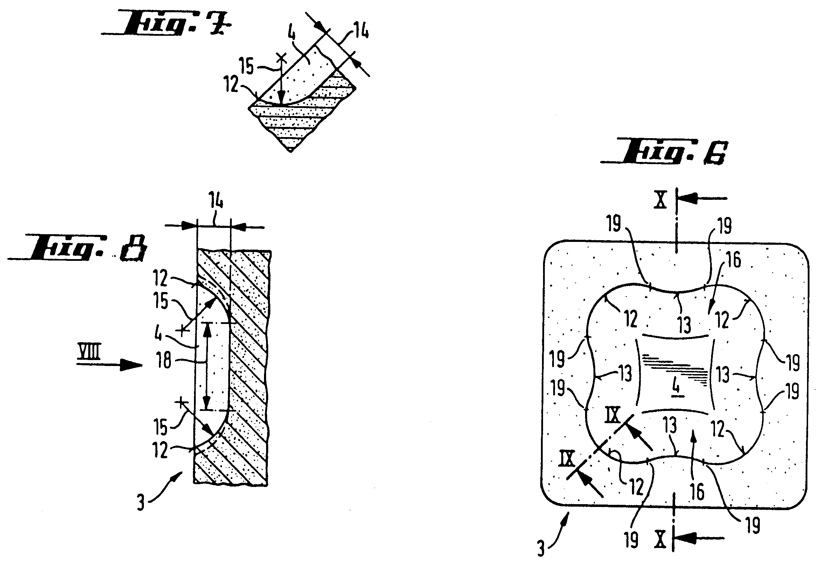

Fig. 6 zeigt eine quadratische Schneidplatte mit sternförmig ausgeführter Spannmulde,

Fis. 7 zeigt als Detail einen Schnitt eines Sternstrahles,

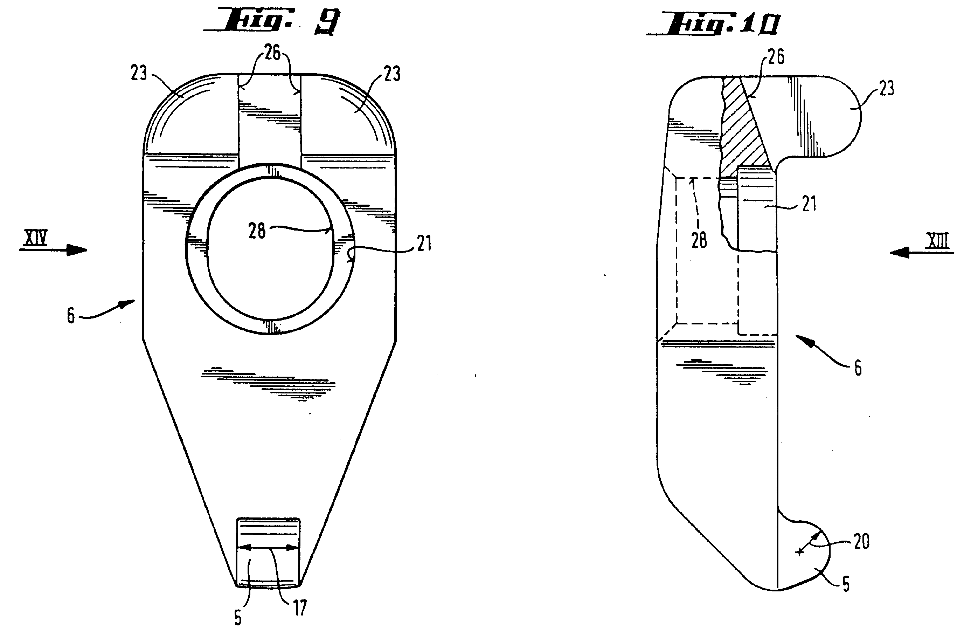

Fig. 8 einen Teilschnitt entlang der Linie X-X von Fig. 6,

Fig. 9 zeigt eine Spannpratze in der Ansicht von unten,

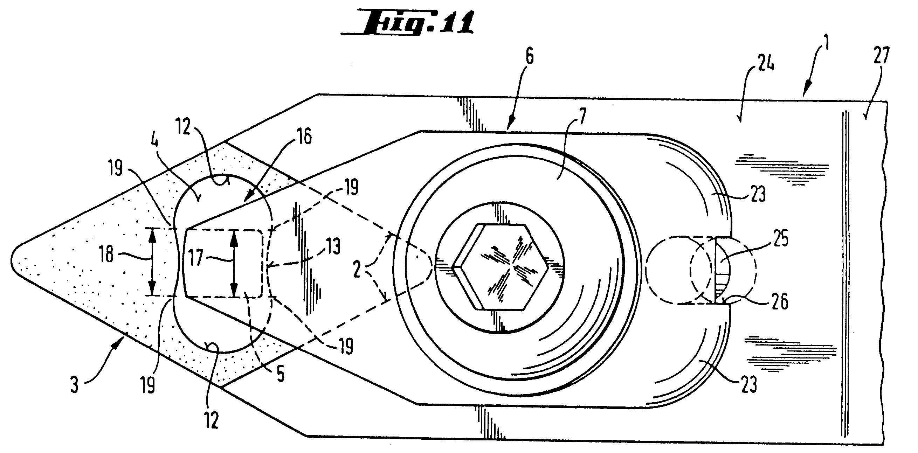

Fig. 10 die Spannpratze in der Seitenansicht im Teilschnitt und

Fig. 11 die Draufsicht auf einen Klemmhalter mit eingelegtem Schneideinsatz sowie aufgesetzter Spannpratze.

Der Klemmhalter 1 weist eine Ausnehmung 2 auf, in die der Schneideinsatz 3 eingelegt ist. Die Spannmulde 4 nimmt den Ansatz 5 der Spannpratze 6 auf, die über die Spannschraube 7 mit dem Klemmhalter 1 verbunden ist. Die konvexen Kurven 12 begrenzen die Spannmulde 4 in ihrer Längsausdehnung und gehen an ihren Enden 19 in die Linien 13 über, die in Fig. 2 als konkave Bögen dargestellt sind. Die Tiefe 14 der Spannmulde 4 wird durch einen Radius 15 geformt, dessen Mittelpunkt sich außerhalb des Schneideinsatzes befindet. Der Boden der Spannmulde 4 ergibt sich aufgrund des Radius 15 als gewölbte Fläche 16. Der Abstand 18 ist die Entfernung zwischen den an einer Linie 13 angreifenden Enden 19 der konvexen Kurven 12.

Der Ansatz 5 der Spannpratze 6 weist eine Breite 17 auf, die gleich oder kleiner ist als der Abstand 18 zwischen den Enden 19 zweier gegenüberliegender konvexer Kurven 12.

Die Hebefeder 22 wird in Aussenkungen 21 geführt, die sich sowohl in der Spannpratze 6 als auch im Klemmhalter 1 befinden. Die Hebefeder 22 umgibt im Bereich der Aussenkungen 21 die Spannschraube 7. Die Führungsnocken 23 sind im rückwärtigen Bereich der Spannpratze 6 angeordnet und durch eine Nut 26 voneinander getrennt. Die Schräge 24 steigt im waagerecht verlaufenden Schaft 27 des Klemmhalters 1 an. In die ist eine Bohrung eingebracht, die die Verdrehsicherung 25 aufnimmt, die als zylindrischer Stift ausgeführt ist. Der Durchmesser der Verdrehsicherung 25 entspricht der Breite der Nut 26, die über die Verdrehsicherung 25 gleiten kann. Um diese Gleitbewegung zu ermöglichen, ist die Aussparung in der Spannpratze 6, durch die die Spannschraube 7 hindurchgreift, als Langloch 28 ausgeführt.

## Patentansprüche

1. Schneidwerkzeug, insbesondere Drehmeißel, bestehend aus einem Klemmhalter (1), der eine Ausnehmung (2) zur Aufnahme eines Schneideinsatzes (3) aufweist, wobei der Schneideinsatz (3) mit mindestens einer Spannmulde (4) versehen ist, in die ein Ansatz (5) einer Spannpratze (6) eingreift, die mit Führungsnocken (23) versehen ist, die an einer Schräge (24) des Klemmhalters (1), der im Bereich der Schräge (24) eine Verdrehsicherung (25), die sich zwischen die Führungsnocken (23) der Spannpratze (6) erstreckt, trägt, angreifen und die Spannpratze (6) über eine Spannschraube (7) mit dem klemmhalter (1) verbunden ist, wobei die Breite (17) des Ansatzes (5) der Spannpratze (6) gleich oder kleiner dem Abstand (18) zwischen den Enden (19) von zwei sich gegenüberliegenden konvexen Flächenbereichen (12) der Spannmulde (4) des Schneideinsatzes (3) ist, gekennzeichnet durch die kombination folgender Merkmale:

a) der Schneideinsatz (3) besteht aus oxidkeramischem Material,

b) die Spannmulde (4) des Schneideinsatzes (3) ist so ausgeführt, daß die sie begrenzenden Wandungen über Kreisrundungen in den Bodenbereich der Spannmulde (4) übergehn,

c) der Ansatz (5) der Spannpratze (6) ist halbtonnen- oder halbzylinderförmig,

d) der Ansatz (5) der Spannpratze (6) greift im wesentlichen im mittleren Bereich der Spannmulde (4) punktförmig an, die an dieser Stelle eine Zylindermantelfläche mit einer zu deren Achse hin gerichteten Aufwölbung aufweist,

e) das Schneidwerkzeug ist so ausgebildet, daß unter Einspannung die Spannpratze (6) sich relativ zur Längsachse des Klemmhalters bewegen kann, um den Ansatz (5) der Spannpratze (6) in punktförmiger Berührung mit der Spannmulde (4) zu halten.

2. Schneidwerkzeug nach Anspruch 1, dadurch gekennzeichnet, daß die Radien (15) größer als die Tiefe (14) der Spannmulde sind.

3. Schneidwerkzeug nach einem der Ansprüche 1 und 2, dadurch gekennzeichnet, daß der maximale Halbmesser des halbtonnenförmigen Ansatzes (5) der Spannpratze (6) 60 bis 80 % der Größe des Radius (15) im engsten Bereich der Spannmulde (4) des Schneideinsatzes (3) beträgt.


## Claims

1. Cutting tool, especially a lathe tool, comprising a clamping holder (1) which has a recess (2) for receiving a cutting insert (3), the cutting insert (3) being provided with at least one gripping recess (4) in which there engages a projection (5) of a gripping claw (6) which is provided with guide cams (23) which engage an inclined surface (24) of the clamping holder (1) which has in the region of the inclined surface (24) an anti-torsion member (25) which extends between the guide cams (23) of the gripping claw (6), and the gripping claw (6) being connected to the clamping holder (1) by means of a tightening screw (7), the width (17) of the projection (5) of the gripping claw (6) being equal to or less than the distance (18) between the ends (19) of two opposing convex surface regions (12) of the gripping recess (4) of the cutting insert (3), characterised by the combination of the following features:

a) the cutting insert (3) is of oxide ceramic material,

b) the gripping recess (4) of the cutting insert (3) is constructed in such a manner that the walls limiting it merge <u>via</u> circular arcs into the bottom of the gripping recess (4),

c) the projection (5) of the gripping claw (6) has the shape of a half-barrel or a half-cylinder,

d) the projection (5) of the gripping claw (6) engages substantially in the middle region of the gripping recess (4) in a point-to-point manner, the gripping recess (4) having at that point a cylindrical bounding surface having a bulge directed towards its axis,

e) the cutting tool is constructed in such a manner that, when engaged, the gripping claw (6) can move relative to the longitudinal axis of the clamping holder in order to maintain point-to-point contact between the projection (5) of the gripping claw (6) and the gripping recess (4).

2. Cutting tool according to claim 1, characterised in that the radii (15) are greater than the depth (14) of the gripping recess.

3. Cutting tool according to either claim 1 or claim 2, characterised in that the maximum radius of the half-barrel-shaped projection (5) of the gripping claw (6) is from 60 to 80 % of the size of the radius (15) in the narrowest region of the gripping recess (4) of the cutting insert (3).


## Revendications

1. Outil de coupe, notamment outil de tournage, constitué d'un porte-plaquette (1) qui présente un évidement (2) pour recevoir une plaquette de coupe (3), la plaquette (3) étant munie au moins d'une cuvette de serrage (4) dans laquelle s'engage une partie en saillie (5) d'une griffe de serrage (6) qui est munie de cames de guidage (23) qui s'engagent sur une partie oblique (24) du porte-plaquette (1), lequel porte au niveau de la partie oblique (24) un moyen de blocage en rotation (25) qui s'étend entre les cames de guidage (23) de la griffe de serrage (6), et la griffe de serrage (6) étant assemblée au porte-plaquette (1) par une vis de serrage (7), la largeur (17) de la partie en saillie (5) de la griffe de serrage (6) étant égale ou inférieure à la distance (18) entre les extrémités (19) de deux parties de surface (12) convexes mutuellement opposées de la cuvette de serrage (4) de la plaquette (3), caractérisé par la combinaison des caractéristiques suivantes:

a) la plaquette (3) est en céramique,

b) la cuvette de serrage (4) de la plaquette (3) est agencée de manière telle que les parois qui la délimitent se raccordent par l'intermédiaire d'arrondis au fond de la cuvette de serrage (4),

c) la partie en saillie (5) de la griffe de serrage ( 6 ) a la forme d'un demi-tonneau ou d'un demi-cylindre,

d) la partie en saillie (5) de la griffe de serrage (6) agit de manière ponctuelle sensiblement dans la région centrale de la cuvette (4) qui présente en ce point une surface enveloppe cylindrique dont la courbure est tournée vers son axe,

e) l'outil de coupe est configuré de telle sorte que, lorsqu'elle est serrée, la griffe de serrage (6) peut se déplacer par rapport à l'axe longitudinal du porte-plaquette, afin de maintenir la partie en saillie (5) de la griffe de serrage (6) en contact ponctuel avec la cuvette de serrage (4).

2. Outil de coupe selon la revendication 1, caractérisé par le fait que les rayons (15) sont supérieurs à la profondeur (14) de la cuvette de serrage.

3. Outil de coupe selon l'une des revendications 1 et 2, caractérisé par le fait que le rayon maximal de la partie en saillie (5) en forme de demi-tonneau de la griffe de serrage (6) est égal à 60 à 80% de la valeur du rayon (15) de la cuvette de serrage (4) de la plaquette (3) dans la partie la plus étroite de cette cuvette.

**Fig. 1**

EP 0 074 601 B2

Fig.5

Fig.2

Fig.3

Fig.4

8

EP 0 074 601 B2

**Fig. 7**

**Fig. 8**

**Fig. 6**

Fig. 9

Fig. 10

EP 0 074 601 B2

Fig.11